**Europäisches Patentamt**

**European Patent Office**

**Office européen des brevets**

(19)

(11) Numéro de publication : **0 465 324 A1**

(12)

# DEMANDE DE BREVET EUROPEEN

(21) Numéro de dépôt : **91401774.4**

(22) Date de dépôt : **28.06.91**

(51) Int. Cl.⁵ : **A23N 15/12**

(30) Priorité : **06.07.90 FR 9008630**

(43) Date de publication de la demande :
**08.01.92 Bulletin 92/02**

(84) Etats contractants désignés :
**AT BE CH DE ES GB IT LI NL**

(71) Demandeur : **FEMIA INDUSTRIE**
**225 à 231 rue de la Garenne**
**F-92008 Nanterre Cédex (FR)**

(72) Inventeur : **Gussow, Henri**
**31 rue Chaudet**
**F-91290 Saint Germain les Arpajon (FR)**
Inventeur : **Plantier, Alain**
**1 rue Saint Exupéry**
**F-78150 le Chesnay (FR)**

(74) Mandataire : **Beauchamps, Georges et al**
**Cabinet Z.Weinstein 20, avenue de Friedland**
**F-75008 Paris (FR)**

(54) Ebouteuse de haricots verts et plaquette formant un élément composant de celle-ci.

㊙   L'invention concerne une ébouteuse (1) de haricots verts à tambour cylindrique tournant (3) et à paroi latérale (6) traversée de fentes allongées (7) identiques et parallèles, espacées en directions respectivement circonférentielle et longitudinale et régulièrement réparties en étant alignées respectivement dans ces deux directions et au moins une rangée longitudinale de couteaux externes (11) en contact tangentiel glissant avec la surface extérieure lisse convexe (21) de ladite paroi latérale (6).

   Les fentes (7) ont leur étendue longitudinale orientée suivant une direction généralement parallèle à l'axe de rotation du tambour (3).

   L'invention est applicable à l'éboutage de haricots verts et analogues.

Fig. 2

La présente invention concerne généralement et a essentiellement pour objet une machine ébouteuse perfectionnée pour haricots verts, à filets ou mange-tout et pour fruits de légumineuses papilionacées analogues à gousses ainsi qu'à titre de produit industriel nouveau, une plaquette constituant un élément composant de ladite machine. L'invention se rapporte également aux diverses applications et utilisations résultant de la mise en oeuvre de la machine et/ou de la plaquette précitées ainsi qu'aux divers systèmes, équipements, appareils, dispositifs et installations qui en sont pourvus.

Dans l'état de la technique antérieure, on connait déjà une telle machine ébouteuse du type comprenant un tambour cylindrique circulaire creux tournant à axe longitudinal de rotation de préférence légèrement incliné de haut en bas et d'amont en aval sur le plan horizontal, comportant deux orifices coaxiaux respectivement amont d'entrée et aval de sortie de produits aux extrémités opposées dudit tambour, une paroi latérale à surface externe lisse traversée de fentes allongées, sensiblement uniformes, identiques et parallèles, espacées en directions respectivement circonférentielle et longitudinale et régulièrement réparties en étant alignées respectivement dans les deux directions précitées, et au moins une rangée longitudinale de couteaux externes, identiques, parallèles, espacés, alignés dont les lames de coupe sont en contact tangentiel glissant avec la surface extérieure lisse convexe de ladite paroi latérale en ayant leurs arêtes tranchantes inclinées sur la direction circonférentielle et orientées respectivement en sens inverse du sens de rotation dudit tambour.

Les deux parois latérales opposées, délimitant chaque fente précitée dans l'épaisseur du côté radialement interne ou concave de la paroi latérale du tambour précité, sont inclinées respectivement en sens contraires l'une par rapport à l'autre, de façon à converger l'une vers l'autre de la face intérieure ou concave à la face extérieure ou convexe vers les bords latéraux de la fente situés dans la surface externe convexe de la paroi latérale du tambour en formant ainsi une sorte d'entonnoir ou d'auge en suivant le profil longitudinal propre de la fente pour guider et favoriser ainsi l'introduction des haricots dans la fente. Les fentes précitées ont leur étendue longitudinale orientée suivant une direction généralement circonférentielle ou périphérique de la paroi latérale du tambour donc dans une direction générale orthogonale à l'axe de rotation du tambour, c'est-à-dire à l'axe de révolution de la surface externe de paroi latérale cylindrique dudit tambour.

La paroi latérale du tambour précité est généralement constituée par l'assemblage de plaquettes identiques rectangulaires arquées, jointivement juxtaposées en rangées parallèles respectivement longitudinales et circonférentielles de plaquettes alignées, chaque plaquette étant courbée suivant sa direction longitudinale propre et pourvue d'un nombre égal de fentes précitées. Chaque fente peut être à configuration ondulée ou rectiligne.

Enfin, la surface radialement interne ou concave de la paroi latérale de tambour est généralement garnie de disques intercalaires, transversaux, minces, coaxiaux sensiblement plans, parallèles, perpendiculaires à l'axe de rotation du tambour, uniformément espacés longitudinalement, disposés respectivement au droit des plans de joint transversaux entre rangées circonférentielles successives de plaquettes et dont chacun est traversé centralement d'une ouverture de passage circulaire excentrée de diamètre relativement grand, les centres respectifs d'ouverture des disques successifs étant angulairement décalés progressivement les uns par rapport aux autres autour de l'axe de rotation du tambour dans le sens de rotation de celui-ci, de manière à former, dans la région centrale de la machine, une sorte de spirale favorisant l'avancement des haricots verts et facilitant la fonction d'introduction des extrémités des haricots verts dans les fentes des plaquettes afin de les ébouter, c'est-à-dire d'avoir leurs bouts sortis coupés par les couteaux extérieurs. Ces disques intercalaires sont généralement en tôle mince d'environ 1 mm d'épaisseur.

Au cours du mouvement de rotation uniforme du tambour, les haricots verts, préalablement introduits dans le tambour par l'orifice amont et cheminant ou avançant en direction généralement longitudinale du tambour et initialement couchés dans la partie basse du tambour, sont entraînés vers le haut du tambour par l'effet plaquant de la force centrifuge jusqu'au point où ils vont retomber pour se planter dans des fentes situées à la partie inférieure du tambour et sensiblement opposées au point où les haricots se détachent de la paroi du tambour, c'est-à-dire cessent d'être entraînés en rotation par celui-ci. La force de pénétration des haricots verts dans les fentes est fonction de la masse individuelle du haricot ainsi que du rayon et de la vitesse de rotation du tambour.

A l'instant où les haricots se piquent dans les fentes en laissant dépasser leurs bouts à l'extérieur de la paroi du tambour, ils occupent une position approximativement radiale c'est-à-dire généralement debout mais, un moment plus tard sous l'effet dynamique composé de la vitesse de rotation du tambour et du changement de direction des haricots au contact des plaquettes, la force d'inertie des haricots ainsi piqués donc retenus prisonniers dans les fentes des plaquettes du tambour, a tendance à les basculer d'avant en arrière dans des plans perpendiculaires à l'axe de rotation du tambour, c'est-à-dire dans !a direction longitudinale propre des fentes, de sorte que chaque haricot a tendance à se coucher le long de la fente dans laquelle il est planté. Dans cette position déviée du haricot, sa partie extrême extérieurement dépassante se présente avec une forte inclinaison devant les couteaux pour être coupée. Il en résulte l'inconvénient que chaque haricot est coupé en biais suivant une section oblique de forme elliptique très marquée amenant le haricot à s'enfoncer encore plus dans la fente en la traversant davantage pour ressortir de nouveau à l'extérieur et être sectionné de nouveau dans sa partie comestible, ce phénomène pouvant se répéter plusieurs fois. En outre, cette coupe biaise ou biseautée fragilise beaucoup l'extrémité (taillée en sifflet) du haricot vert qui risque d'être détériorée par des chocs répétés qui finissent par faire éclater cette extrémité au détriment de la présentation commerciale du produit. Il en résulte donc une augmentation importante des déchets et une perte substantielle de la valeur marchande du produit.

L'invention a principalement pour but de supprimer l'inconvénient précité en modifiant la structure des fentes de telle façon que le basculement des haricots verts soit efficacement empêché par un maintien positif de chaque haricot dans sa position relative droite ou dressée qu'il prend à l'instant où il se pique dans une fente. Ce problème technique est résolu conformément à l'invention dans une machine ébouteuse du genre mentionné précédemment par le fait que les fentes précitées ont leur étendue longitudinale orientée suivant une direction généralement parallèle à l'axe de rotation du tambour.

Selon une autre caractéristique de l'invention, les deux parois latérales opposées de chaque fente sont asymétriques et forment, en section droite par un plan transversal perpendiculaire à l'axe de révolution du tambour, un angle aigu rentrant dont les côtés sont inégalement inclinés sur la trace du plan radial longitudinal médian de la fente, le côté amont ou arrière, dans le sens de rotation du tambour, étant moins incliné donc à pente plus abrupte par rapport à cette trace que le côté aval ou avant.

Grâce à cet agencement, chaque haricot vert, piqué dans une fente, est maintenu dans la position la plus normale possible à la surface lisse extérieure du tambour parce qu'en raison de la réaction d'inertie du haricot vert, engendrée par le mouvement de rotation du tambour, chaque haricot vert est plaqué contre le bord abrupt de la fente contre lequel il s'adosse en étant ainsi mieux soutenu.

Selon encore une autre caractéristique de l'invention, chaque plaquette précitée, constituant une partie composante de la paroi latérale du tambour, est ainsi pourvue d'au moins une rangée de fentes parallèles à la direction transversale propre de ladite plaquette et uniformément espacées en direction longitudinale propre de ladite plaquette.

Selon encore une autre caractéristique de l'invention, la surface interne de paroi latérale du tambour est garnie de rangées circonférentiellement équidistantes linéairement de cloisons déflectrices planes partielles identiques, longitudinalement alignées suivant des génératrices respectives de ladite paroi latérale et radialement saillantes vers l'intérieur, chaque rangée s'étendant dans l'intervalle de paroi pleine séparant deux rangées longitudinales successives de fentes précitées, chaque cloison déflectrice étant comprise entre deux disques intercalaires successifs précités en s'étendant d'un disque à l'autre et ayant une largeur radiale inférieure à la largeur radiale locale correspondante de la partie annulaire pleine du disque adjacent, de façon à former, avec les disques intercalaires dans chaque compartiment délimité entre deux disques successifs, une série circonférentielle de chambres ouvertes vers l'intérieur. Cette structure est avantageuse en ce qu'elle crée des chambres ou poches de réception pour les haricots verts pour améliorer le guidage et le maintien de ceux-ci dans une bonne position d'éboutage car les haricots verts, dès leur introduction dans les chambres, garderont une position individuelle très favorable en coopération avec les nouvelles fentes pour obtenir un éboutage correct. Lorsque les haricots verts sont piqués dans les nouvelles fentes selon l'invention et quelle que soit la forme, par exemple ondulée ou rectiligne, de celles-ci, chaque haricot prend appui contre la face arrière plus abrupte de la fente dans laquelle il est engagé tout en étant bloqué dans celle-ci, l'angle d'inclinaison de la face avant ou opposée sur le plan médian longitudinal radial de la fente étant plus grand que l'angle d'inclinaison de la face arrière sur ce plan pour favoriser la pénétration des haricots verts dans les fentes.

Selon encore une autre caractéristique de l'invention, les cloisons déflectrices alignées d'une même rangée longitudinale de cloisons, peuvent être constituées respectivement par des pièces séparées ou peuvent faire partie intégrante d'une bande de matière continue en une seule pièce traversant chacun des disques intercalaires successifs par une fente radiale correspondante ménagée dans le disque.

La hauteur ou largeur radiale de chaque cloison déflectrice précitée est de préférence comprise entre une valeur minimale assurant un bon maintien du haricot vert et une valeur maximale limitée pour ne pas gêner la plongée, chute ou descente du haricot dans la poche ou chambre de réception de celui-ci, délimitée entre deux cloisons déflectrices voisines et deux disques intercalaires successifs et, selon encore une autre caractéristique de l'invention, chaque cloison déflectrice précitée a une largeur radiale ou hauteur inférieure à la longueur du haricot vert et de préférence approximativement égale à une valeur comprise entre les deux tiers et les trois quarts de la longueur d'un haricot vert ou analogue et entre deux cloisons déflectrices successives en direction circonférentielle se trouvent par exemple environ cinq fentes successives.

L'invention vise également le produit industriel nouveau formant plaquette utilisable comme élément composant de paroi latérale de tambour d'une machine ébouteuse conforme à l'invention et du type en forme de portion de cylindre creux de révolution, à contour rectangulaire, arquée suivant sa direction longitudinale propre et à fentes allongées sensiblement uniformes, identiques, parallèles et équidistantes, cette plaquette étant caractérisée en ce que lesdites fentes sont orientées en direction transversale propre de la plaquette parallèlement à l'axe de révolution dudit cylindre et forme au moins une rangée de fentes, laquelle s'étend en direction longitudinale propre de la plaquette.

D'une façon connue en soi, les deux parois latérales opposées, délimitant chaque fente précitée dans l'épaisseur du côté concave de ladite plaquette, sont inclinées respectivement en sens contraires l'une par rapport à l'autre, de façon à converger l'une vers l'autre de la face concave à la face convexe vers les bords latéraux de la fente situés dans la face convexe extérieurement lisse et, selon une autre caractéristique de l'invention, les deux parois latérales opposées de chaque fente sont asymétriques et forment, en section transversale droite par un plan perpendiculaire à l'axe de révolution du cylindre précité, un angle aigu rentrant dont les côtés sont inégalement inclinés sur la trace du plan radial longitudinal médian de ladite fente, l'un desdits côtés étant moins incliné donc à pente plus abrupte par rapport à cette trace que l'autre côté.

La présente invention constitue donc un progrès important vis-à-vis de l'état connu de la technique antérieure en offrant l'avantage d'une efficacité de fonctionnement fortement améliorée, d'un rendement grandement accru et d'une production beaucoup plus économique que dans le passé.

L'invention sera mieux comprise et d'autres buts, caractéristiques, détails et avantages de celle-ci apparaîtront plus clairement à la lecture de la description explicative qui va suivre en se reportant aux dessins schématiques annexés donnés uniquement à titre d'exemple non limitatif illustrant un mode de réalisation spécifique actuellement préféré de l'invention et dans lesquels.

La figure 1 représente une vue extérieure d'ensemble en perspective d'une ébouteuse de haricots verts conforme à l'invention, vue du côté de l'extrémité amont d'introduction de haricots verts dans le tambour.

La figure 2 est une vue fragmentaire à plus grande échelle de la partie cerclée II de la figure 1.

La figure 3 est une vue isolée segmentée, à échelle agrandie, de la face concave ou du côté radialement interne d'une plaquette conforme à l'invention, formant un élément composant de la paroi latérale du tambour de l'ébouteuse de la figure 1.

La figure 4 est une vue partielle, à plus grande échelle, en coupe longitudinale suivant la ligne de section IV-IV de la figure 3.

La figure 5 est une vue en coupe transversale selon la ligne de section V-V de la figure 3.

La figure 6 est une vue fragmentaire en perspective coupée d'une portion de plaquette, du côté de sa face concave ou radialement interne.

La figure 7 est une vue fragmentaire en perspective, à plus petite échelle, d'une portion de la paroi latérale de tambour de l'ébouteuse, vue du côté concave ou radialement interne de cette paroi.

La figure 8 représente une vue partielle, à plus grande échelle, en coupe transversale suivant la ligne de section VIII-VIII de la figure 7.

La figure 9 est une vue fragmentaire, du côté de sa face concave ou radialement interne, d'une plaquette selon un autre mode de réalisation de l'invention à fentes rectilignes.

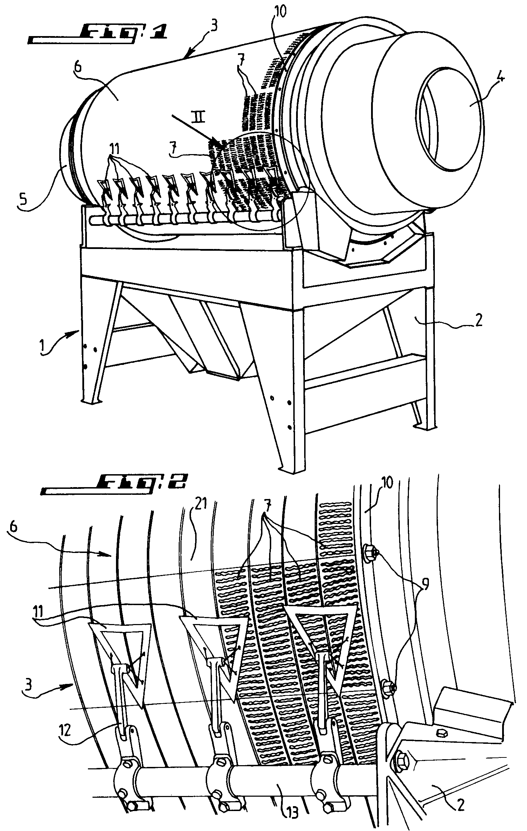

Selon l'exemple de réalisation représenté sur les figures 1 et 2 des dessins, la machine ébouteuse conforme à l'invention, désignée d'une façon générale par le chiffre de référence 1, comprend un bâti inférieur 2 supportant, de façon rotative, un tambour généralement cylindrique de révolution 3 dont l'axe central longitudinal est légèrement incliné de haut en bas et d'amont en aval sur un plan horizontal. Ce tambour comporte, à ses deux extrémités opposées, respectivement deux orifices coaxiaux, à savoir : un orifice 4 d'introduction de produits à traiter (en particulier de haricots verts à ébouter) situé du côté haut ou amont et un orifice 5 de sortie des haricots verts éboutés situé du côté bas ou aval.

La paroi latérale cylindrique circulaire 6 du tambour 3 est à surface extérieure lisse et est constituée par l'assemblage d'une multiplicité de plaquettes rectangulaires courbes identiques 7 réalisées avantageusement en une matière synthétique ou plastique et juxtaposées jointivement en rangées successives s'étendant dans des directions respectivement circonférentielle ou périphérique et longitudinale (suivant une direction parallèle à l'axe de révolution du tambour). La direction de la dimension longitudinale propre de chaque plaquette est orientée suivant la direction circonférentielle du tambour. Comme cela est mieux visible sur les figures 2 à 4 des dessins, chaque plaquette est pourvue, à chacune de ses deux extrémités suivant sa dimension longue, d'un évidement allongé 8 formant une rainure cylindrique à section transversale droite sensiblement semi-circulaire, s'étendant suivant la largeur propre de la plaquette, c'est-à-dire, en position assemblée des plaquettes, parallèlement à la direction de l'axe de révolution du tambour et servant à l'assemblage des plaquettes les unes aux autres au moyen de tiges ou tringles rectilignes identiques 9 (voir figures 2, 7 et 8) dont chacune s'étend parallèlement à l'axe de révolution du tambour à la jonction de deux rangées longitudinales de plaquettes en traversant, par ses deux extrémités filetées opposées, deux flasques-brides circulaires coaxiaux 10 situés respectivement aux extrémités opposées du tambour et supportées par ceux-ci en y étant fixées à chaque extrémité par un écrou vissé sur cette extrémité filetée de tige. Les deux plaquettes successives, situées respectivement de part et d'autre de chaque tige 9 et appartenant à une même rangée circonférentielle de plaquettes 7, embrassent ainsi jointivement, par leurs rainures extrêmes respectives 8, la tringle ou tige intercalaire 9, de sorte que les plaquettes sont ainsi montées et maintenues assemblées dans le tambour tout en restant facilement démontables par le simple retrait des tiges 9. Contre la surface radialement externe lisse ou convexe de la paroi latérale 6 du tambour sont élastiquement appliqués, en contact tangentiel glissant, des couteaux 11 répartis de façon espacée et sélectivement réglable, suivant une ou plusieurs rangées longitudinale de couteaux situées de préférence en dessous du plan diamétral approximativement horizontal du tambour et dont une seule est représentée sur les figures 1 et 2 des dessins. Les couteaux d'une même rangée sont portés respectivement par des supports individuels 12 montés de façon sélectivement réglable sur un arbre longitudinal commun 13 fixé au bâti 2 de la machine. D'une façon connue en soi, chaque couteau précité est d'une forme sensiblement triangulaire à deux lames de coupe formant deux côtés du triangle convergeants en sens inverse du sens de rotation du tambour et dont les arêtes tranchantes respectives sont inclinées sur les génératrices de la paroi cylindrique 6 du tambour respectivement dans des sens longitudinaux opposés.

A titre d'exemple purement indicatif, la paroi latérale 6 du tambour 3 de l'ébouteuse est constituée de 31 rangées circonférentielles de plaquettes 7, chaque plaquette ayant par exemple une longueur propre de 260 mm, une largeur propre de 58 mm et une épaisseur de 10 mm. La figure 3 représente une vue isolée de la face concave ou creuse d'une plaquette conforme à un mode de réalisation actuellement préféré de l'invention. Cette plaquette, à surface externe bombée ou convexe lisse, comporte des fentes transversales identiques parallèles espacées longitudinalement équidistantes 14, au nombre par exemple de 21, s'étendant parallèlement à sa dimension en largeur et ayant leurs axes longitudinaux propres médians écartés les uns des autres de 13 mm par exemple. Chaque fente est avantageusement de configuration ondulée dont chacun des deux bords latéraux opposés consiste en une suite d'échancrures adjacentes à contour apparent en forme d'arcs de cercle rentrants identiques, séparés respectivement par des dents saillantes arrondies à sommet en arc de cercle de rayon sensiblement plus petit, donnant ainsi une apparence dentelée à un tel bord latéral. Le bord latéral opposé ondulé ou dentelé comporte un nombre d'échancrures rentrantes ou concaves et de dents saillantes ou convexes respectivement inférieur d'une unité à celui de l'autre bord latéral, de façon que les dents respectives des deux bords latéraux opposés soient mutuellement décalées en direction longitudinale les unes par rapport aux autres de manière que chaque dent saillante ou convexe d'un bord latéral se trouve sensiblement en face d'une échancrure concave de l'autre bord latéral et réciproquement. Les contours apparents respectifs des deux bords latéraux opposés se raccordent à chaque extrémité par un arc de cercle de rayon plus petit que les arcs de cercle identiques formant les échancrures respectives des deux bords latéraux opposés. La largeur de chaque fente est par exemple d'environ 4,5 mm.

Du côté concave de la plaquette 7, chaque fente 14 est délimitée par deux parois latérales opposées de forme ondulée correspondant à la forme ondulée de la fente et ces deux parois latérales opposées sont inclinées respectivement en sens contraires en divergeant l'une de l'autre à partir des bords correspondants de la fente situés dans la face lisse convexe de la plaquette, de sorte que chaque face de paroi latérale de la fente est constituée par une série de portions de surface cylindriques concaves adjacentes, séparées successivement les unes des autres par des arêtes arrondies inclinées orientées suivant une génératrice commune de deux telles portions de surface cylindriques concaves.

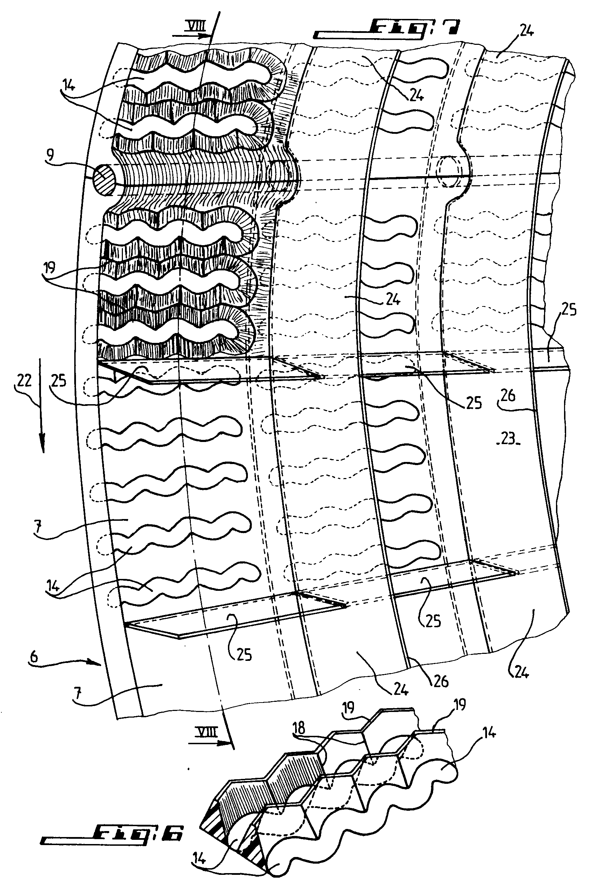

Sur la figure 3, chaque fente 14 comprend par exemple un bord latéral 15 formé de cinq échancrures circulaires successives séparées respectivement par quatre dents saillantes ou arêtes convexes 16 tandis que le bord latéral opposé se compose de quatre échancrures circulaires successives 17 séparées respectivement par trois dents saillantes ou arêtes convexes 18. Du côté creux concave de la plaquette 7, chaque portion pleine de paroi intermédiaire, séparant deux fentes 14 successives, présente l'aspect d'une sorte de nervure à flancs opposés respectivement ondulés formant les parois latérales adjacentes de deux fentes 14 voisines et se raccordant l'une à l'autre suivant une arête sensiblement en forme de ligne brisée en zig-zag sensiblement régulière (voir figures 6 et 7). La figure 5 montre que les bords longitudinaux opposés 20 de la plaquette 7 ont une forme de section transversale droite approximativement en triangle rectangle en se terminant, du côté concave de la plaquette, par une portion chanfreinée ou biseautée de façon à constituer une arête longitudinale située dans la face plane longitudinale externe de bordure de la plaquette.

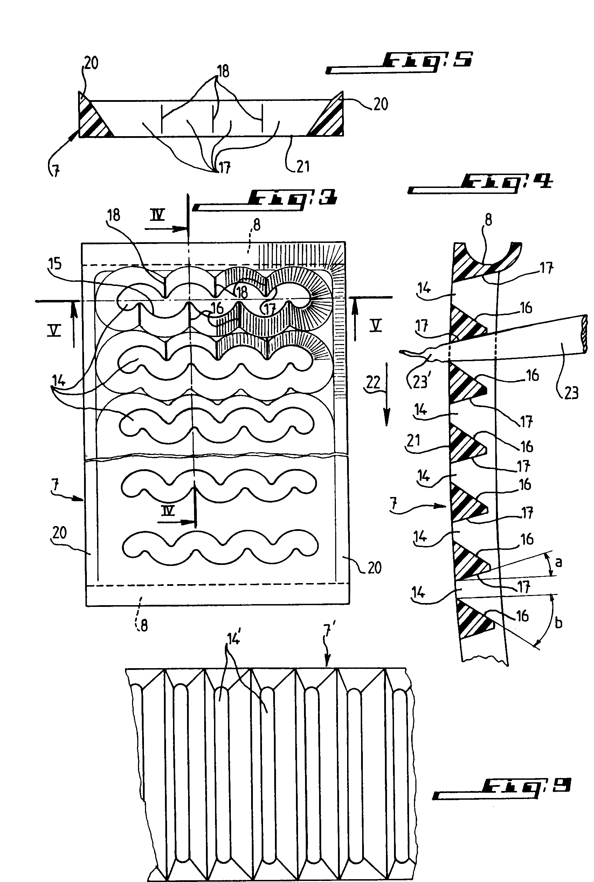

La figure 4 montre la face convexe lisse 21 de la paroi latérale 6 du tambour, dans laquelle sont ménagées les fentes 14 ainsi que les inclinaisons différentes respectives, dans des sens inverses, des deux faces latérales de bordure opposées 16, 17 de chaque fente 14. C'est ainsi que la face latérale de bordure 17 de chaque fente 14, qui est située en arrière par rapport au sens de rotation, indiqué par la flèche 22, du tambour, est plus abrupte, c'est-à-dire moins inclinée sur le plan longitudinal moyen de la fente 14 que la face latérale de bordure opposée 16 située en avant relativement au sens de rotation 22 du tambour, laquelle est donc plus en pente vis-à-vis de ce plan longitudinal moyen de la fente. A titre d'exemple purement indicatif, la face latérale de bordure 17, formant le côté arrière plus abrupt de la fente 14, fait un angle a d'environ 15° avec le plan radial longitudinal médian précité de la fente tandis que l'autre face latérale de bordure 16 de la fente, formant le côté avant plus penché de celle-ci, fait un angle b d'environ 35° avec ledit plan, ce plan, sensiblement normal à la surface externe lisse 21, pouvant être matérialisé par sa trace sur cette surface.

En cours de fonctionnement de l'ébouteuse, on constate ainsi qu'un haricot vert 23 à ébouter, qui est engagé dans une fente 14 en traversant celle-ci de façon à laisser dépasser son bout 23' à sectionner vers l'extérieur de la surface de paroi lisse 21 du tambour, se trouve plaqué, en raison du mouvement de rotation du tambour, par sa réaction d'inertie contre la face latérale de bordure plus abrupte 17 qui va donc le soutenir et l'empêcher de basculer ou de se coucher, de manière que son bout extérieurement dépassant soit tranché par le couteau correspondant sensiblement perpendiculairement à l'axe longitudinal médian du haricot. Les deux faces opposées 16, 17 de la fente, dont les pentes convergent respectivement en direction de la surface externe lisse 21, forment ainsi une sorte d'entonnoir ou de trémie facilitant l'engagement et guidant l'introduction du haricot dans la fente.

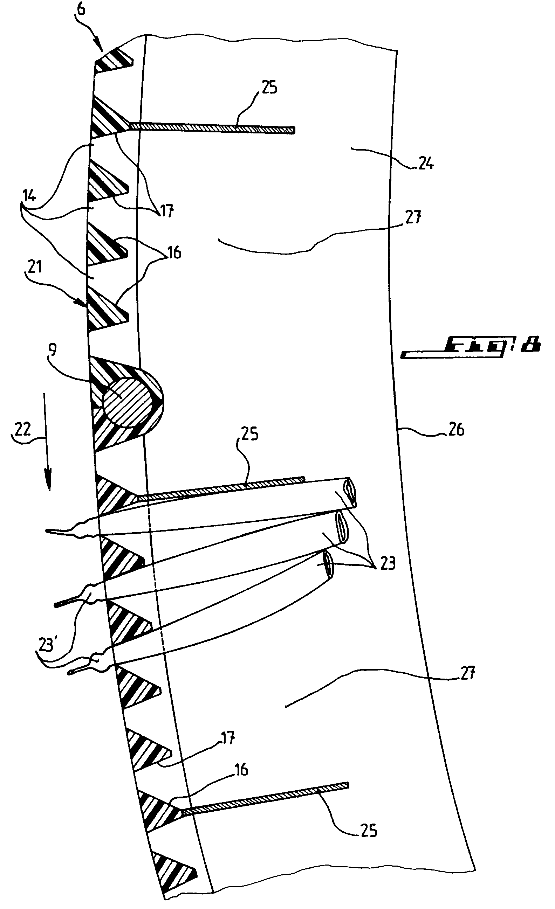

Comme le montre la figure 7, la face concave ou radialement interne de la paroi latérale 6 du tambour 3 comporte, d'une part, une série de disques intercalaires 24 montés respectivement au droit des jonctions entre rangées circonférentielles ou périphériques successives de plaquettes 7 et, d'autre part, des rangées longitudinales circonférentiellement espacées de cloisons déflectrices alignées 25 s'étendant respectivement entre les disques intercalaires successifs 24 en étant radialement saillantes vers l'intérieur. Les disques intercalaires et les cloisons déflectrices sont avantageusement métalliques en tôle mince, les cloisons déflectrices 25 étant orientées sensiblement suivant des plans radiaux. Ces cloisons déflectrices 25 forment ainsi des rangées circonférentielles successives de cloisons déflectrices qui sont de préférence linéairement équidistantes en direction circonférentielle ou angulairement espacées uniformément. Chaque cloison déflectrice 25 est disposée au droit d'un intervalle de paroi pleine séparant deux fentes 14 successives en direction circonférentielle et il est prévu par exemple cinq fentes successives entre deux cloisons déflectrices successives en direction circonférentielle. Ces cloisons déflectrices 25, qui sont sensiblement planes tout comme les disques intercalaires 24, ont une largeur radiale avantageusement inférieure à la largeur radiale locale correspondante des disques intercalaires 24 qui sont transversés respectivement par des ouvertures centrales excentrées 26 angulairement décalées successivement les unes par rapport aux autres dans le même sens autour de l'axe de rotation du tambour. Comme le montre la figure 8, les cloisons déflectrices 25 ont une largeur radiale inférieure à la longueur des haricots verts à ébouter. Les volumes, délimités ainsi par la combinaison des disques intercalaires 24 avec les cloisons déflectrices 25, forment des chambres ou poches 27 guidant les haricots verts 23 de façon à faciliter leur orientation relative individuelle pour une introduction correcte dans les fentes du tambour. Les cloisons déflectrices 25 peuvent par exemple être écartées les unes des autres d'environ 65 mm en direction circonférentielle et il peut être prévu par exemple 31 disques intercalaires 24, de sorte que chaque rangée circonférentielle de cloisons déflectrices comportera par exemple 48 cloisons déflectrices 25 en constituant ainsi, avec les disques intercalaires, par exemple 1440 chambres ou poches précitées 27 pour recevoir les haricots verts.

La figure 8 montre la disposition relative de plusieurs haricots verts 23 à ébouter correctement positionnés dans trois fentes circonférentiellement successives de la paroi latérale du tambour en prenant appui contre une cloison déflectrice 25 à l'intérieur d'une chambre réceptrice 27.

La figure 9 est une vue semblable à la figure 3 mais représentant une autre forme géométrique de réalisation de plaquette 7' à fentes rectilignes 14' à parois opposées planes et présentant par ailleurs toutes les autres caractéristiques et propriétés de la plaquette précédemment décrite. Deux parois planes adjacentes, entre deux fentes successives, forment un dièdre saillant à arête rectiligne.

Bien entendu, l'invention n'est nullement limitée aux modes de réalisation décrits et représentés car elle couvre également tous les moyens équivalents à ceux décrits ainsi que leurs combinaisons dans le cadre des revendications annexées.

## Revendications

1. Machine ébouteuse (1) de haricots verts (23), à filets ou mange-tout et de fruits de légumineuses papilionacées analogues à gousses, du type comprenant un tambour cylindrique circulaire creux tournant (3) à axe longitudinal de rotation de préférence légèrement incliné de haut en bas et d'amont en aval sur le plan horizontal, comportant deux orifices coaxiaux respectivement amont d'entrée (4) et aval de sortie (5) de produits aux extrémités opposées dudit tambour (3), une paroi latérale (6) à surface externe lisse (21) traversée de fentes allongées (14), sensiblement uniformes, identiques et parallèles, espacées en directions respectivement circonférentielle et longitudinale et régulièrement réparties en étant alignées respectivement dans les deux directions précitées et au moins une rangée longitudinale de couteaux externes (11), identiques, parallèles, espacés, alignés dont les lames de coupe sont en contact tangentiel glissant avec la surface extérieure lisse convexe (21) de ladite paroi latérale (6) en ayant leurs arêtes tranchantes inclinées sur la direction circonférentielle et orientées respectivement en sens inverse du sens de rotation du tambour, caractérisée en ce que lesdites fentes (14) ont leur étendue longitudinale orientée suivant une direction généralement parallèle à l'axe de rotation dudit tambour (3).

2. Machine selon la revendication 1, dans laquelle les deux parois latérales opposées (15, 17), délimitant chaque fente précitée (14) dans l'épaisseur du côté concave radialement interne de la paroi latérale (6) du tambour précité (3), sont inclinées respectivement en sens contraires l'une par rapport à l'autre de façon à converger l'une vers l'autre de la face intérieure concave à la face extérieure convexe vers les bords latéraux de la fente (14) situés dans la surface externe convexe (21) de ladite paroi latérale (6) du tambour (3), caractérisée en ce que les deux parois latérales (16, 17) de chaque fente (14) sont asymétriques et forment, en section droite par un plan transversal perpendiculaire à l'axe de révolution du tambour, un angle aigu rentrant dont les côtés sont inégalement inclinés sur !a trace du plan radial longitudinal médian de !a fente (14), le côté amont ou arrière (17), dans le sens de rotation (22) du tambour (3), étant moins incliné donc à pente plus abrupte par rapport à cette trace que le côté aval ou avant (16).

3. Machine selon la revendication 3, caractérisée en ce que le côté arrière précité (17) fait un angle d'environ 15° avec la trace précitée tandis que le côté avant précité (16) fait un angle d'environ 35° avec ladite trace.

4. Machine selon l'une des revendications précédentes, à paroi latérale (6) du tambour (3) constituée par l'assemblage de plaquettes identiques rectangulaires arquées (7), jointivement juxtaposées en rangées parallèles respectivement longitudinales et circonférentielles de plaquettes alignées, chaque plaquette (7) étant courbée suivant sa direction longitudinale propre et pourvue d'un nombre égal de fentes précitées (14), caractérisée en ce que chaque plaquette (7) est pourvue d'au moins une rangée de fentes transversales parallèles (14) uniformément espacées en direction longitudinale de ladite plaquette (7).

5. Machine selon la revendication 4, à surface radialement interne ou concave de paroi latérale (6) de tambour (3) garnie de disques intercalaires transversaux minces (24) coaxiaux, sensiblement plans, parallèles, perpendiculaires à l'axe de rotation du tambour (3), uniformément espacés longitudinalement, disposés respectivement au droit des plans de joints transversaux entre rangées circonférentielles successives de plaquettes (7) et dont chacun est traversé centralement d'une ouverture de passage circulaire excentrée (26) de grand diamètre, les centres respectifs d'ouverture des disques successifs (24) étant angulairement décalés progressivement les uns par rapport aux autres autour de l'axe de rotation du tambour (3) dans le sens de rotation de celui-ci, caractérisée en ce que ladite surface interne de paroi latérale (6) de tambour (3) est garnie de rangées circonférentiellement équidistantes linéairement de cloisons déflectrices planes partielles identiques (25) longitudinalement alignées suivant des génératrices respectives de ladite paroi latérale (6) et radialement saillantes vers l'intérieur, chaque rangée s'étendant dans l'intervalle de paroi pleine séparant deux rangées longitudinales successives de fentes précitées (14), chaque cloison déflectrice (25) étant comprise entre deux disques intercalaires successifs (24) en s'étendant d'un disque à l'autre et ayant une largeur radiale inférieure à la largeur radiale locale correspondante de la partie annulaire pleine du disque adjacent, de façon à former, avec les disques intercalaires (24) dans chaque compartiment délimité entre deux disques successifs, une série circonférentielle de chambres (27) ouvertes vers l'intérieur.

6. Machine selon la revendication 5, caractérisée en ce que les cloisons déflectrices alignées (25) d'une même rangée longitudinale de cloisons déflectrices sont constituées par des pièces séparées ou font partie intégrante d'une bande de matière continue en une seule pièce traversant chacun des disques intercalaires successifs (24) par une fente radiale correspondante réalisée dans chaque disque.

7. Machine selon la revendication 6 ou 7, caractérisée en ce que chaque cloison déflectrice précitée (25) a une largeur radiale inférieure à la longueur du haricot vert (23) et de préférence approximativement égale à une valeur comprise entre les deux tiers et les trois quarts de la longueur d'un haricot vert ou analogue et entre deux cloisons déflectrices successives (25) en direction circonférentielle se trouvent par exemple cinq fentes successives (14).

8. Produit industriel formant plaquette (7) utilisable comme élément composant de paroi latérale (6) de tambour (3) d'une machine ébouteuse (1) selon l'une des revendications précédentes, du type en forme de portion de cylindre circulaire creux, à contour rectangulaire, arquée suivant sa direction longitudinale propre, à fentes allongées (14), sensiblement uniformes, identiques, parallèles, équidistantes, caractérisé en ce que lesdites fentes (14) sont orientées en direction transversale propre de la plaquette (7) parallèlement à l'axe de révolution dudit cylindre et forment au moins une rangée de fentes (14), laquelle s'étend en direction longitudinale propre de la plaquette.

9. Plaquette selon la revendication 8, dans laquelle les deux parois latérales opposées (16, 17), délimitant chaque fente précitée (14) dans l'épaisseur du côté concave de ladite plaquette (7), sont inclinées respectivement en sens contraires l'une par rapport à l'autre, de façon à converger l'une vers l'autre de la face concave à la face convexe (21) vers les bords latéraux (15, 17) de la fente (14) situés dans la face convexe extérieurement lisse (21), caractérisée en ce que les deux parois latérales opposées (16, 17) de chaque fente (14) sont asymétriques et forment, en section transversale droite par un plan perpendiculaire à l'axe de révolution du cylindre précité, un angle aigu rentrant (a, b) dont les côtés sont inégalement inclinés sur la trace du plan radial longitudinal médian de ladite fente (14), l'un (17) desdits côtés étant moins incliné donc à pente plus abrupte par rapport à cette trace que l'autre côté (16).

10. Plaquette selon la revendication 9, caractérisée en ce que le côté plus abrupt précité (17) fait un angle d'environ 15° avec la trace précitée tandis que l'autre côté plus penché (16) fait un angle d'environ 35° avec ladite trace.

Fig. 1

Fig. 2

_Fig. 5_

_Fig. 4_

_Fig. 3_

_Fig. 9_

_Fig.7_

_Fig.6_

Fig. 8

Office européen
des brevets

**RAPPORT DE RECHERCHE EUROPEENNE**

Numero de la demande

EP    91 40 1774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-2 393 461 (FINLEY)<br>* page 1, colonne 1, ligne 48 - page 2, colonne 1, ligne 31 * | 1 | A23N15/12 |
| Y |  | 2-10 |  |
| X | US-A-2 376 062 (KERR)<br>* page 1, colonne 2, ligne 19 - ligne 23; figure 2 * | 1 |  |
| Y | US-A-1 336 991 (URSCHEL)<br>* le document en entier * | 2-10 |  |
| A | US-A-2 979 096 (KARGE ET AL.)<br>* figures 2,3,5 * | 4 |  |
| A | US-A-2 114 730 (URSCHEL) |  |  |
| A | FR-A-1 257 041 (SELIGMANN) |  |  |

| | |
|---|---|
| | DOMAINES TECHNIQUES RECHERCHES (Int. Cl.5 ) |
| | A23N |

Le présent rapport a été établi pour toutes les revendications

| Lieu de la recherche | Date d'achèvement de la recherche | Examinateur |
|---|---|---|
| LA HAYE | 06 SEPTEMBRE 1991 | Oorschot J. van |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...............................................................................
& : membre de la même famille, document correspondant

EPO FORM 1503 03.82 (P0402)